# EUROPÄISCHE PATENTSCHRIFT

(11) **EP 1 785 321 B1**
(45) Veröffentlichungstag und Bekanntmachung des Hinweises auf die Patenterteilung: **12.03.2008**
(21) Anmeldenummer: 05024419.3
(22) Anmeldetag: 09.11.2005
(51) Int. Cl.: B60R 22/38, B60R 22/46, B60R 22/44

(54) **Sicherheitsgurtvorrichtung**
Seatbelt apparatus
Dispositif de ceinture de sécurité

(43) Veröffentlichungstag der Anmeldung: 16.05.2007
(73) Patentinhaber: Delphi Technologies, Inc., Troy, MI 48007 (US)
(72) Erfinder: Adomeit, Julius, 14195 Berlin (DE); Marshall, Stephen, 13357 Berlin (DE)
(74) Vertreter: Manitz, Finsterwald & Partner GbR

(56) Entgegenhaltungen:
- DE-A1- 10 346 967
- US-A1- 2003 209 624
- US-A1- 2004 021 029

## Beschreibung

Die Erfindung betrifft eine Sicherheitsgurtvorrichtung für Kraftfahrzeuge mit einem Sicherheitsgurt, einem Gurtaufroller und einem Antrieb für den Aufroller.

Derartige Sicherheitsgurtvorrichtungen sind grundsätzlich bekannt. Mittels des Antriebs kann beispielsweise eine so genannte Pre-Safe- oder Pre-Crash-Funktion realisiert werden, indem z.B. bei einem Unfall unmittelbar vor dem Aufprall des Fahrzeugs auf ein Hindernis oder aufgrund eines Warnsignals, das eine im Fahrzeug implementierte Warnfunktion z.B. durch permanentes Aus- und Bewerten der Verkehrssituation beim Auftreten einer bestimmte vorgebbare Bedingungen erfüllenden gefährlichen Situation erzeugt, der Aufroller in Aufwickelrichtung angetrieben wird, um dafür zu sorgen, dass der Gurt rechtzeitig eng am Körper des jeweiligen Fahrzeuginsassen anliegt. Problematisch hierbei ist, dass diese Gurtsysteme zurücksetzbar sein sollen, da dann, wenn der erwartete Aufprall ausbleibt bzw. Entwarnung gegeben wird, der Gurt wieder entspannt werden muss. Außerdem sollen die Gurtsysteme in der Lage sein, in dem Zeitraum zwischen dem ersten Vorspannen oder Vorstraffen des Gurtes und der Freigabe des Gurtes bei Ausbleiben des erwarteten Unfalls bzw. bei Entwarnung den Gurt im vorgespannten bzw. vorgestrafften Zustand zu halten.

Wenn für den Antrieb des Gurtaufrollers ein Elektromotor verwendet wird, dann besteht das Problem, dass der Motor zum Halten des vorgespannten Gurtes permanent eingeschaltet sein muss, was zu einer Überhitzung bzw. Überlastung des Motors führen kann. Um dieses Problem zu vermeiden, kann die auch als "Main Locking" bezeichnete normale Gurtverriegelung der Rückholeinrichtung verwendet werden, um den Gurt im Anschluss an die Vorspannung zu halten, ohne dass hierbei ein für diese Gurtvorspannung sorgender Elektromotor aktiviert zu bleiben braucht. Allerdings ist hierbei wiederum problematisch, dass für das erwähnte Entspannen des Gurtes bei Ausbleiben des erwarteten Aufpralls bzw. Unfalls bzw. bei Entwarnung die Gurtverriegelung gelöst werden muss, was bekanntlich ein zweites Ziehen am Gurt erfordert. Bei dieser Vorgehensweise wird also innerhalb kurzer Zeit zweimal hintereinander am Gurt gezogen: das erste Mal zum Vorspannen des Gurtes und das zweite Mal zum Lösen der Gurtverriegelung. Das zweite Ziehen am Gurt - bekannt als "Second Stroke"-Problematik - wird von den betroffenen Insassen nicht nur als störend empfunden, sondern kann auch zu gefährlichen Reaktionen des Insassen führen, denn für den Insassen erfolgt der "Second Stroke" überraschend ohne eine für ihn ersichtliche Gefahrensituation.

Wenn, wie z.B. in der US 2003/0209624 offenbart, anstelle der normalen Gurtverriegelung zwischen dem Motor und dem Aufroller ein selbsthemmendes Getriebe vorgesehen wird, das in der Lage ist, bei ausgeschaltetem Motor den vorgespannten Gurt zu halten, und das im Anschluss an die Haltephase durch den wieder eingeschalteten Motor überwunden werden kann, um den Gurt wieder zu entspannen, dann kann hierdurch die erwähnte "Second Stroke"-Problematik umgangen werden. Problematisch sind hierbei allerdings die relativ großen Reibungsverluste einer auf dem Prinzip der Selbsthemmung beruhenden mechanischen Halteeinrichtung. Diese Reibungsverluste müssen über den Elektromotor ausgeglichen werden, d.h. in das System "hinein gesteckt" werden, was einen erhöhten Energiebedarf zur Folge hat und eine größere elektrische Leistung erfordert. Dies wiederum kann zu Problemen mit einer Überhitzung bzw. Überlastung des Motors führen.

Aufgabe der Erfindung ist es, eine Sicherheitsgurtvorrichtung der eingangs genannten Art zu schaffen, die auf möglichst einfache und zuverlässige Weise im Anschluss an eine Vorspannung oder Vorstraffung des Gurtes unter Vermeidung der "Second Stroke"-Problematik sowohl ein Halten als auch ein daraufhin erfolgendes Entspannen des Gurtes ermöglicht, wobei dies mit einem möglichst geringen Energieeinsatz realisierbar sein soll.

Die Lösung dieser Aufgabe erfolgt durch die Merkmale des Anspruchs 1.

Erfindungsgemäß ist in den Antriebsstrang zwischen Antrieb und Aufroller ein unidirektional wirksames Sperrorgan integriert, das ausgehend von einem sperrenden Normalzustand bei vom Gurt ausgehender Kraftübertragung die Sperrwirkung verstärkt und bei vom Antrieb ausgehender Kraftübertragung in einen Freigabezustand umsteuert.

Das erfindungsgemäße undirektional wirksame Sperrorgan unterscheidet hinsichtlich seiner Wirkung danach, ob eine Kraftübertragung über den Antriebsstrang antriebsseitig oder gurtseitig initiiert wird. Durch den sperrenden Normalzustand des Sperrorgans ist gewährleistet, dass der Gurt im vorgespannten bzw. vorgestrafften Zustand gehalten wird, ohne dass hierfür Energie aufgebracht werden muss, da der Antrieb zum Halten des vorgespannten Zustands nicht benötigt wird und daher in dieser Haltephase inaktiv sein kann.

Durch die Möglichkeit, das Sperrorgan zwischen dem sperrenden Normalzustand und dem Freigabezustand umzusteuern, kann der Antrieb unter minimalem Energieaufwand die Sperrung des Antriebsstrangs aufheben und bei im Freigabezustand befindlichem Sperrorgan den Gurtaufroller antreiben.

Insbesondere in Verbindung mit einer intelligenten Steuerung für einen als Antrieb dienenden Elektromotor kann aufgrund des erfindungsgemäßen Sperrorgans der elektrische Energiebedarf und damit die erforderliche elektrische Leistung auf ein Minimum reduziert werden. Insbesondere ist es dadurch möglich, das gesamte System schneller und mit höherer Frequenz als bisher zu verwenden, ohne dass eine Überlastung oder Überhitzung des Antriebsmotors auftritt.

Durch die Erfindung wird auch die eingangs erläuterte "Second Stroke"-Problematik vermieden, denn der Antrieb für den Gurtaufroller kann sowohl zum Vorspannen oder Vorstraffen des Gurtes als auch zum Antreiben des Gurtaufrollers in der umgekehrten Richtung, also zum Abwickeln des Gurtes, benutzt werden. Beim Abwickeln des Gurtes kann - besonders vorteilhaft bei Verwendung eines Elektromotors - der zeitliche Verlauf der Gurtentspannung gezielt gemäß einem vorgebbaren, insbesondere den Fahrzeuginsassen nicht störenden Schema erfolgen.

Bevorzugte Ausführungsformen der Erfindung sind auch in den abhängigen Ansprüchen, der Beschreibung sowie der Zeichnung angegeben.

In einer Weiterbildung der Erfindung kann in den Antriebsstrang zwischen dem Antrieb und dem Aufroller ein mechanischer Energiespeicher integriert sein. Dabei kann der Antrieb in Abhängigkeit von einem Ansteuersignal wahlweise entweder in einem vom Aufroller entkoppelten Speichermodus zum Füllen des Energiespeichers oder in einem Aufwickelmodus betrieben werden, in welchem der Antrieb mit dem Aufroller gekoppelt und der Aufroller durch ein von dem Antrieb und dem zuvor gefüllten Energiespeicher gemeinsam aufgebrachtes Moment in Aufwickelrichtung angetrieben wird.

Hierbei kann das erfindungsgemäße Sperrorgan zwischen dem Antrieb und dem mechanischen Energiespeicher angeordnet sein. Das erfindungsgemäße Sperrorgan ermöglicht es, den mechanischen Energiespeicher - beispielsweise eine gespannte Feder - für unbegrenzte Zeit im gefüllten (bzw. gespannten) Zustand zu halten, ohne dass hierzu ein vom Antrieb aufzubringendes Haltemoment erforderlich wäre.

Erfindungsgemäß lässt sich also auch in Systemen, die mit einem solchen mechanischen Energiespeicher arbeiten, der insgesamt für den Betrieb eines solchen Systems erforderliche Energiebedarf auf ein Minimum reduzieren. Durch einen solchen Energiespeicher wird der Antrieb im "Ernstfall", d.h. wenn der Aufroller in Aufwickelrichtung angetrieben werden soll, von dem Energiespeicher unterstützt, der zuvor vom Antrieb selbst gefüllt wurde. Es kann somit der Umstand ausgenutzt werden, dass während eines normalen Fahrzeugbetriebs ausreichend Zeit zur Verfügung steht, in welcher der Energiespeicher gefüllt werden kann. Hierzu wird der Antrieb selbst eingesetzt, so dass keine Zusatzsysteme erforderlich sind. Zum Füllen des Energiespeichers brauchen also vom Antrieb keine übermäßig hohen Leistungsspitzen erbracht zu werden. Im Pre-Safe- bzw. Pre-Crash-Fall wird dann die erforderliche hohe Leistung von dem Antrieb und dem zuvor gefüllten Energiespeicher, die dann gewissermaßen "am gleichen Strang ziehen", gemeinsam bereitgestellt.

Alle nachstehend erläuterten Weiterbildungen der Erfindung sind in Systemen sowohl mit als auch ohne einen derartigen mechanischen Energiespeicher realisierbar.

Bevorzugt ist das erfindungsgemäße Sperrorgan derart ausgebildet und integriert, dass es sowohl bei in Aufwickelrichtung als auch in Abwickelrichtung erfolgender Kraftübertragung die Sperrwirkung verstärkt bzw. in den Freigabezustand umsteuert.

Die Sperrwirkung wird also bei vom Antrieb initiierter Kraftübertragung unabhängig davon aufgehoben, ob der Antrieb in Aufwickelrichtung oder in Abwickelrichtung betrieben wird. Entsprechend wird der Antriebsstrang durch das Sperrorgan unabhängig davon blockiert, ob bei gurtseitig initiierter Kraftübertragung eine Beaufschlagung in Aufwickelrichtung oder in Abwickelrichtung erfolgt.

Bei dem Sperrorgan handelt es sich insbesondere um eine Sperrfeder, die als Schling- oder Spiralfeder ausgebildet sein kann. Eine solche Sperrfeder kann derart ausgelegt werden, dass sie in einem entspannten Normalzustand mit einem beispielsweise zapfen- oder bolzenförmigen Halteabschnitt, auf den sie aufgesteckt ist, kraftschlüssig verbunden ist. Eine solche Sperrfeder lässt sich problemlos ausreichend stark auslegen, um einen drehfesten Klemmsitz auf dem Halteabschnitt zu bewirken, der den Antriebsstrang bei gurtseitiger Beaufschlagung zuverlässig blockiert. Unter "entspannt" ist hier zu verstehen, dass keine gurt- oder antriebsseitige Beaufschlagung der Sperrfeder erfolgt, d.h. die Sperrwirkung durch "Umschlingen" des Halteabschnitts wird durch eine entsprechende Vorspannung der Sperrfeder erzielt, die danach strebt, sich weiter zu entspannen als es der Halteabschnitt zulässt.

Die Sperrfeder kann zwei beabstandete Steuerabschnitte aufweisen, die mit gurt- und antriebsseitigen Treibabschnitten zusammenwirken. Wenn die Sperrfeder gewickelt ist, dann können die Steuerabschnitte die Enden der Wicklung bilden.

Dabei kann vorgesehen sein, dass - je nach Auslegung - sich die Sperrfeder durch Zusammendrücken der Steuerabschnitte zusammenzieht und durch Auseinanderdrücken der Steuerabschnitte aufweitet, oder umgekehrt. Dabei kann vorgesehen sein, dass die Sperrfeder durch Zusammendrücken der Steuerabschnitte die Sperrwirkung verstärkt und durch Auseinanderdrücken der Steuerabschnitte in den Freigabezustand umsteuert, oder umgekehrt.

Die unidirektionale Wirksamkeit des Sperrorgans kann durch eine geschickte Anordnung ihrer Steuerabschnitte und der gurt- und antriebsseitigen Treibabschnitte, mit denen die Sperrfeder über ihre Steuerabschnitte beaufschlagt wird, erreicht werden.

Insbesondere kann ein innerer Treibabschnitt der einen Seite, insbesondere der Antriebsseite, zwischen den beiden Steuerabschnitten der Sperrfeder positioniert sein, wobei der innere Treibabschnitt zusammen mit den Steuerabschnitten zwischen zwei einen festen Abstand voneinander aufweisenden Teilen eines äußeren Treibabschnitts der anderen Seite, insbesondere der Gurtseite, positioniert ist.

Hierbei wirkt der Antrieb gewissermaßen von innen auf die Steuerabschnitte der Sperrfeder, wohingegen die Einwirkung durch die Gurtseite von außen erfolgt.

Um eine besonders zuverlässige Verstärkung der Sperrwirkung bzw. Umsteuerung in den Freigabezustand der Sperrfeder sicherzustellen, ist es bevorzugt, wenn die Steuerabschnitte der Sperrfeder mit Spiel zwischen den Treibabschnitten positioniert sind. Hierdurch ist gewährleistet, dass zu Beginn einer Kraftübertragung zuerst die Sperrfeder beaufschlagt wird, bevor der Kraftschluss zwischen Antriebsseite und Gurtseite hergestellt wird und - je nachdem, von welcher Seite die Kraftübertragung initiiert wird - der Antriebsstrang entweder verstärkt blockiert oder freigegeben wird.

Die Steuerabschnitte der Sperrfeder und die antriebs- und gurtseitigen Treibabschnitte können in einem radialen Abstand von einer Drehachse des Antriebsstrangs angeordnet sein, um die sich die auf dem feststehenden Halteabschnitt sitzende Sperrfeder sowie antrieb- und gurtseitige Träger für die Treibabschnitte drehen können.

Die Erfindung wird im Folgenden beispielhaft unter Bezugnahme auf die Zeichnung beschrieben. Es zeigen:
- Fig. 1 und 2: verschiedene perspektivische Explosionsansichten eines ein erfindungsgemäßes Sperrorgan enthaltenden Abschnitts des Antriebsstrangs einer erfindungsgemäßen Sicherheitsgurtvorrichtung,
- Fig. 3: eine erfindungsgemäße Sicherheitsgurtvorrichtung im zusammengesetzten Zustand, und
- Fig. 4: schematisch ein Beispiel für die Ausgestaltung des Antriebsstrangs im Bereich des erfindungsgemäßen Sperrorgans.

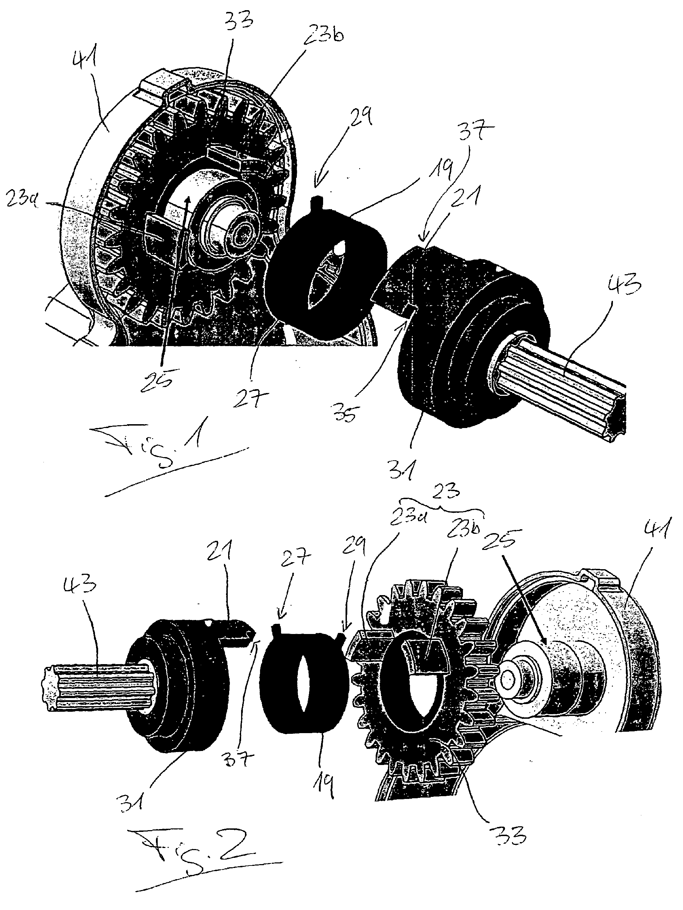

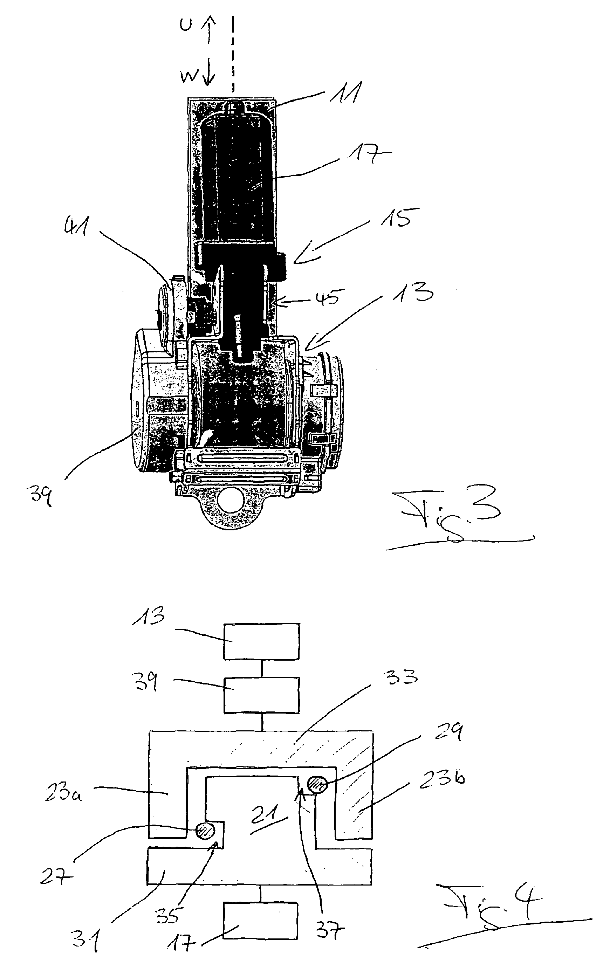

In den Fig. 1 und 2 ist von dem Antriebsstrang zwischen dem einen Elektromotor 17 umfassenden Antrieb 15 (Fig. 3) einerseits und dem Gurtaufroller 13 andererseits motorseitig eine Antriebswelle 43 mit einem drehfest verbundenen Träger 31 für einen motorseitigen Treibabschnitt 21 und gurtseitig ein in einem Gehäuse 41 angeordnetes Zahnrad 33 dargestellt, das als Träger für einen zweigeteilten gurtseitigen Treibabschnitt 23 dient, der zwei in Umfangsrichtung beabstandete Bestandteile 23a, 23b umfasst.

Die Treibabschnitte 21, 23 sind als axiale Vorsprünge ausgebildet, die in einem radialen Abstand von einer Drehachse angeordnet sind, welche mit den Mittelachsen der Antriebswelle 43 sowie eines gehäusefesten Zapfens 25 zusammenfallen. Auf dem zylindrischen Zapfen 25 ist das gurtseitige Trägerzahnrad 33 drehbar gelagert.

Im zusammengesetzten Zustand (Fig. 3, Fig. 4) befindet sich der motorseitige Treibabschnitt 21 zwischen den beiden Teilen 23a, 23b des gurtseitigen Treibabschnitts 23, so dass - in Umfangsrichtung betrachtet - eine formschlüssige Verbindung besteht. Diese Verbindung ist in Umfangsrichtung mit Spiel behaftet, wie insbesondere Fig. 4 zeigt, d.h. bevor zwischen den Treibabschnitten 21, 23 eine Kraftübertragung erfolgen kann, muss von demjenigen Treibabschnitt, von welchem die Kraftübertragung ausgeht, ein bestimmter Leerweg zurückgelegt werden, bevor eine Mitnahme des jeweils anderen Treibabschnitts erfolgt. In einem praktischen Ausführungsbeispiel beträgt dieser Leerweg oder "Totgang" lediglich wenige Grad.

In den Antriebsstrang ist erfindungsgemäß ein Sperrorgan in Form einer gewickelten Schlingfeder 19 integriert, die koaxial zum gurtseitigen Trägerzahnrad 33 ebenfalls auf dem Zapfen 25 sitzt, das als Halteabschnitt für die Schlingfeder 19 dient. Die Enden der Schlingfeder 19 sind als radial nach außen abstehende Steuerabschnitte 27, 29 ausgebildet. Die Steuerabschnitte 27, 29 sind sowohl axial als auch in Umfangsrichtung beabstandet.

Fig. 4 zeigt, dass im zusammengesetzten Zustand die Steuerabschnitte 27, 29 jeweils zwischen dem inneren motorseitigen Treibabschnitt 21 und einem der beiden Teile 23a, 23b des äußeren gurtseitigen Treibabschnitts 23 positioniert sind. Dabei liegen die Steuerabschnitte 27, 29 im Bereich von entsprechend axial und in Umfangsrichtung versetzt angeordneten Aussparungen 35, 37, die im motorseitigen Treibabschnitt 21 ausgebildet sind. Hierdurch besitzt der Treibabschnitt 21 eine Z-artige Form. Die Aussparungen 35, 37 sind ausreichend groß bemessen, um die Steuerabschnitte 27, 29 aufnehmen zu können. Alternativ können die Aussparungen 35, 37 auch an den beiden Teilen 23a, 23b des äußeren gurtseitigen Treibabschnitts 23 ausgebildet sein.

Die Querschnittsform des die Schlingfeder 19 bildenden, insbesondere drahtartigen Teils, die in Fig. 4 kreisförmig dargestellt ist, ist grundsätzlich beliebig und kann z. B. auch rechteckig oder quadratisch sein.

Fig. 4 zeigt den Ausgangs- oder Normalzustand des Sperrorgans 19, in welchem es weder motorseitig noch gurtseitig beaufschlagt ist. In diesem Zustand sind die Steuerabschnitte 27, 29 des Sperrorgans 19 - in Umfangsrichtung gesehen - sowohl vom motorseitigen Treibabschnitt 21 als auch von den äußeren Teilen 23a, 23b des gurtseitigen Treibabschnitts 23 beabstandet. In Umfangsrichtung betrachtet besteht zwischen den einzelnen Bestandteilen in diesem Zustand also ein Spiel.

Die Schlingfeder 19 ist derart gewickelt und vorgespannt, dass sie in diesem unbelasteten Zustand danach strebt, sich auf einen Innendurchmesser zusammenzuziehen, der kleiner ist als der Außendurchmesser des Zapfens 25, auf den die Schlingfeder 19 gesteckt ist. Im Normalzustand gemäß Fig. 4 ist die Schlingfeder 19 folglich auf dem Zapfen 25 derart festgeklemmt, dass eine drehfeste kraftschlüssige Verbindung zwischen der Schlingfeder 19 und dem gehäusefesten Zapfen 25 besteht.

Die Steuerabschnitte 27, 29 sind in Bezug auf die Wicklung der Schlingfeder 19 derart positioniert, dass sich durch Zusammendrücken der Steuerabschnitte 27, 29 in Umfangsrichtung die Schlingfeder 19 weiter zusammenzieht. Umgekehrt wird durch Auseinanderdrücken der Steuerabschnitte 27, 29 in Umfangsrichtung ein Aufweiten der Schlingfeder 19 bewirkt. Dabei ist hier unter "Zusammendrücken" eine auf den Treibabschnitt 21 zu und unter "Auseinanderdrücken" vom Treibabschnitt 21 weg gerichtete Bewegung der Steuerabschnitte gemeint. Beim Zusammenziehen bzw. Aufweiten bewegt sich jeweils zumindest im Wesentlichen nur derjenige Steuerabschnitt, der vom betreffenden Treibabschnitt beaufschlagt wird, während der andere Steuerabschnitt zumindest im Wesentlichen in der ursprünglichen Position verbleibt.

Mit dieser Auslegung der Schlingfeder 19 korrespondiert die Anordnung der motor- und gurtseitigen Treibabschnitte 21, 23 gemäß Fig. 4: Der motorseitige Treibabschnitt 21 befindet sich zwischen den beiden Steuerabschnitten 27, 29, die wiederum von den beiden in Umfangsrichtung einen festen Abstand zueinander aufweisenden Teilen 23a, 23b des insofern gabelförmigen gurtseitigen Treibabschnitts 23 umgriffen werden.

Aus dieser Konfiguration zusammen mit dem erwähnten, in Umfangsrichtung bestehenden Spiel zwischen den Steuerabschnitten 27, 29 und den Treibabschnitten 21, 23 ergibt sich die folgende Funktionsweise:

Wird der Elektromotor 17 betätigt, so beaufschlagt der motorseitige Treibabschnitt 21 unabhängig davon, ob die Betätigung in Aufwickelrichtung W oder in Abwickelrichtung U (Fig. 3) erfolgt, den betreffenden Steuerabschnitt 27, 29 in dem Sinne, dass die beiden Steuerabschnitte 27, 29 in Umfangsrichtung auseinandergedrückt werden, d. h. der Abstand zwischen den beiden Steuerabschnitten 27, 29 größer wird. Hierdurch weitet sich die Schlingfeder 19 auf, wodurch ihr drehfester Klemmsitz auf dem Haltezapfen 25 aufgehoben und somit die Schlingfeder 19 aus dem sperrenden Normalzustand in einen Freigabezustand umgesteuert wird. In diesem Freigabezustand kann sich die Schlingfeder 19 auf dem Haltezapfen 25 drehen. Für diese Umsteuerung genügt bereits eine Auslenkung des betreffenden Steuerabschnitts 27, 29 um wenige Grad.

Die zum Umsteuern in den Freigabezustand erforderliche Auslenkung des betreffenden Steuerabschnitts 27, 29 mittels des motorseitigen Treibabschnitts 21 findet statt, bevor der motorseitige Treibabschnitt 21 von innen an den betreffenden Teil 23a bzw. 23b des äußeren gurtseitigen Treibabschnitts 23 stößt.

Dies bedeutet, dass die Beaufschlagung des Aufrollers 13 durch den Motor 17 bei vollständig aufgehobener Sperrung des Antriebsstranges erfolgt, da sich die Schlingfeder 19 bereits im Freigabezustand befindet. Die Aussparungen 35, 37 des motorseitigen Treibabschnitts 21 dienen zur Aufnahme des betreffenden Steuerabschnitts 27, 29 während des Antriebs des Aufrollers 13, wenn der motorseitige Treibabschnitt 21 innen am betreffenden Teil 23a, 23b des gurtseitigen Treibabschnitts 23 anliegt.

Umgekehrt bewirkt eine vom Gurt 11 ausgehende Kraftübertragung unabhängig davon, ob diese in Aufwickelrichtung W oder in Abwickelrichtung U erfolgt, eine Bewegung des betreffenden Teils 23a, 23b des gurtseitigen Treibabschnitts 23 gegen den betreffenden Steuerabschnitt 27, 29 der Schlingfeder 19, und zwar bevor der betreffende Teil 23a, 23b an den inneren motorseitigen Treibabschnitt 21 stößt. Hierdurch werden die Steuerabschnitte 27, 29 der Schlingfeder 19 zusammengedrückt, d. h. der Abstand zwischen den beiden Steuerabschnitten 27, 29 wird verringert, wodurch diese danach strebt, sich weiter zusammenzuziehen. Die Klemmkraft, welche die Schlingfeder 19 drehfest auf dem gehäusefesten Zapfen 25 hält, wird hierdurch weiter erhöht, womit die sperrende Wirkung der Schlingfeder 19 verstärkt wird.

Erfindungsgemäß ist sozusagen der mit dem Sperrorgan 19 versehene Antriebsstrang bezüglich der Drehrichtung zwar symmetrisch, bezüglich derjenigen Seite, von der die Kraftübertragung ausgeht, aufgrund der unidirektionalen Wirksamkeit des Sperrorgans jedoch asymmetrisch.

In einer vom Gurt 11 ausgehenden Richtung ist der Antriebsstrang durch diese asymmetrische Wirkungsweise der Schlingfeder 19 gewissermaßen selbst hemmend ausgebildet. Bei vom Gurt 11 ausgehender Kraftübertragung kann der gurtseitige Treibabschnitt 23 folglich aufgrund des in Sperrrichtung wirksamen Sperrorgans 19 den motorseitigen Treibabschnitt 21 nicht drehen, und zwar weder in Aufwickelrichtung W noch in Abwickelrichtung U. Ohne Betätigung des Motors 17 ist der Sicherheitsgurt 11 daher gezwungen, im jeweils herrschenden Spannungs- bzw. Straffungszustand zu verbleiben.

Nachdem im Pre-Safe- bzw. Pre-Crash-Fall der Gurt 11 mittels des Motors 17 gestrafft worden ist, was bei in den Freigabezustand umgesteuerter Schlingfeder 19 erfolgt, kann der Motor 17 abgeschaltet werden. Die von selbst in den sperrenden Zustand zurückkehrende Schlingfeder 19 sorgt dafür, dass der vorgespannte bzw. vorgestraffte Zustand des Gurtes 11 gehalten wird. Über den Gurt 11 einwirkende Kräfte können diesen Gurtzustand nicht verändern, da das Sperrorgan 19 das gurtseitige Zahnrad 33, das den Treibabschnitt 23 trägt, in beiden Drehrichtungen blockiert.

Soll der vorgespannte Zustand des Gurtes 11 aufgehoben werden, so wird der Motor 17 in Abwickelrichtung betätigt, woraufhin die Schlingfeder 19 in den Freigabezustand umgesteuert wird, so dass der Motor 17 den Aufroller 13 in Abwickelrichtung antreiben kann.

In Fig. 4 ist schematisch die eingangs bereits erläuterte mögliche Weiterbildung angedeutet, die darin besteht, dass zwischen dem Motor 17 und dem Aufroller 13 zusätzlich ein mechanischer Energiespeicher 39 z.B. in Form einer Spiralfeder angeordnet ist. Der Energiespeicher 39 befindet sich zwischen dem gurtseitigen Trägerzahnrad 33 und dem Aufroller 13.

Auf Einzelheiten zu Aufbau, Integration und Funktionsweise dieses Energiespeichers 39 soll an dieser Stelle nicht näher eingegangen werden, da die Art und Weise der Integration des mechanischen Energiespeichers 39 an sich nicht Gegenstand der Erfindung ist.

Von Bedeutung ist, dass das erfindungsgemäße unidirektionale Sperrsystem sowohl mit als auch ohne einen derartigen mechanischen Energiespeicher einsetzbar ist.

### Bezugszeichenliste

- 11: Sicherheitsgurt
- 13: Gurtaufroller
- 15: Antrieb für den Aufroller
- 17: Elektromotor des Antriebs
- 19: Sperrorgan, Schlingfeder
- 21: innerer Treibabschnitt (motorseitig)
- 23: äußerer Treibabschnitt (gurtseitig)
- 23a: Teil des äußeren Treibabschnitts
- 23b: Teil des äußeren Treibabschnitts
- 25: Halteabschnitt, Zapfen
- 27: Steuerabschnitt des Sperrorgans
- 29: Steuerabschnitt des Sperrorgans
- 31: Träger des motorseitigen Treibabschnitts
- 33: Träger des gurtseitigen Treibabschnitts, Zahnrad
- 35: Aussparung
- 37: Aussparung
- 39: mechanischer Energiespeicher
- 41: Gehäuse
- 43: Antriebswelle
- 45: Getriebe

- W: Aufwickelrichtung
- U: Abwickelrichtung

## Patentansprüche

1. Sicherheitsgurtvorrichtung für Kraftfahrzeuge mit
- einem Sicherheitsgurt (11),
- einem Gurtaufroller (13), und
- einem Antrieb (15), der vorzugsweise einen Elektromotor (17) umfasst, für den Aufroller (13),
wobei in den Antriebsstrang zwischen Antrieb (15) und Aufroller (13) ein unidirektional wirksames Sperrorgan (19) integriert ist, das ausgehend von einem sperrenden Normalzustand bei vom Gurt (13) ausgehender Kraftübertragung die Sperrwirkung verstärkt und bei vom Antrieb (15) ausgehender Kraftübertragung in einen Freigabezustand umsteuert.

2. Sicherheitsgurtvorrichtung nach Anspruch 1,
**dadurch gekennzeichnet,**
**dass** das Sperrorgan (19) sowohl bei in Aufwickelrichtung (W) als auch in Abwickelrichtung (U) erfolgender Kraftübertragung die Sperrwirkung verstärkt bzw. in den Freigabezustand umsteuert.

3. Sicherheitsgurtvorrichtung nach Anspruch 1 oder 2,
**dadurch gekennzeichnet,**
**dass** das Sperrorgan (19) ein mechanisches Sperrorgan ist.

4. Sicherheitsgurtvorrichtung nach einem der vorhergehenden Ansprüche,
**dadurch gekennzeichnet,**
**dass** das Sperrorgan (19) eine Sperrfeder umfasst, die insbesondere als Schling- oder Spiralfeder ausgebildet ist.

5. Sicherheitsgurtvorrichtung nach Anspruch 4,
**dadurch gekennzeichnet,**
**dass** die Sperrfeder (19) auf einem vom Antriebsstrang entkoppelten, bezüglich antriebs- und gurtseitiger Treibabschnitte (21, 23) feststehenden Halteabschnitt (25) sitzt, mit dem die Sperrfeder (19) im Sperrzustand kraftschlüssig verbunden ist.

6. Sicherheitsgurtvorrichtung nach Anspruch 4 oder 5,
**dadurch gekennzeichnet,**
**dass** die Sperrfeder (19) zwei beabstandete Steuerabschnitte (27, 29) aufweist, die mit gurt- und antriebsseitigen Treibabschnitten (21, 23) zusammenwirken.

7. Sicherheitsgurtvorrichtung nach Anspruch 6,
**dadurch gekennzeichnet,**
**dass** die Sperrfeder (19) gewickelt ist und die Steuerabschnitte (27, 29) die Enden der Wicklung bilden.

8. Sicherheitsgurtvorrichtung nach Anspruch 6 oder 7,
**dadurch gekennzeichnet,**
**dass** sich die Sperrfeder (19) durch Zusammendrücken der Steuerabschnitte (27, 29) zusammenzieht und durch Auseinanderdrücken der Steuerabschnitte (27, 29) aufweitet, oder umgekehrt.

9. Sicherheitsgurtvorrichtung nach einem der Ansprüche 6 bis 8,
**dadurch gekennzeichnet,**
**dass** die Sperrfeder (19) durch Zusammendrücken der Steuerabschnitte (27, 29) die Sperrwirkung verstärkt und durch Auseinanderdrücken der Steuerabschnitte (27, 29) in den Freigabezustand umsteuert, oder umgekehrt.

10. Sicherheitsgurtvorrichtung nach einem der Ansprüche 6 bis 9,
**dadurch gekennzeichnet,**
**dass** ein innerer Treibabschnitt (21) der einen Seite zwischen den beiden Steuerabschnitten (27, 29) der Sperrfeder (19) positioniert ist, wobei der innere Treibabschnitt (21) zusammen mit den Steuerabschnitten (27, 29) zwischen zwei einen festen Abstand voneinander aufweisenden Teilen (23a, 23b) eines äußeren Treibabschnitts (23) der anderen Seite positioniert ist.

11. Sicherheitsgurtvorrichtung nach einem der Ansprüche 6 bis 10,
**dadurch gekennzeichnet,**
**dass** bei im Normalzustand befindlicher Sperrfeder (19) deren Steuerabschnitte (27, 29) zumindest zu einem Treibabschnitt (21, 23), vorzugsweise zu beiden Treibabschnitten, mit Spiel positioniert sind.

12. Sicherheitsgurtvorrichtung nach Anspruch 10 oder 11,
**dadurch gekennzeichnet,**
**dass** der innere Treibabschnitt (21) der Antriebsseite und der äußere Treibabschnitt (23) der Gurtseite zugeordnet ist.

13. Sicherheitsgurtvorrichtung nach einem der Ansprüche 6 bis 12,
**dadurch gekennzeichnet,**
**dass** die Steuerabschnitte (27, 29) der Sperrfeder (19) und die antriebs- und gurtseitigen Treibabschnitte (21, 23) in einem radialen Abstand von einer Drehachse des Antriebsstrangs angeordnet sind, um die sich die auf dem feststehenden Halteabschnitt (25) sitzende Sperrfeder (19) sowie antriebs- und gurtseitige Träger (31, 33) für die Treibabschnitte (21, 23) drehen können.

## Claims

1. A seat belt apparatus for motor vehicles comprising
- a seat belt (11);
- a belt retractor (13); and
- a drive (15), which preferably comprises an electric motor (17), for the retractor (13);
wherein a unidirectionally effective blocking member (19) is integrated into the drivetrain between the drive (15) and the retractor (13) and, starting from a normal blocking state, amplifies the blocking effect with a force transmission starting from the belt (13) and reverses it into a release state with a force transmission starting from the drive (15).

2. A seat belt apparatus in accordance with claim 1, **characterized in that** the blocking member (19) amplifies the blocking effect or reverses it into the release state with a force transmission taking place both in the wind-up direction (W) and in the unwinding direction (U).

3. A seat belt apparatus in accordance with claim 1 or claim 2, **characterized in that** the blocking member (19) is a mechanical blocking member.

4. A seat belt apparatus in accordance with any one of the preceding claims, **characterized in that** the blocking member (19) includes a blocking spring which is in particular made as a loop spring or spiral spring.

5. A seat belt apparatus in accordance with claim 4, **characterized in that** the blocking spring (19) is seated on a holding section (25) which is decoupled from the drivetrain, is stationary with respect to drive sections (21, 23) on the drive side and on the belt side and to which the blocking spring (19) is connected in a force transmitting manner in the blocked state.

6. A seat belt apparatus in accordance with claim 4 or claim 5, **characterized in that** the blocking spring (19) has two spaced apart control sections (27, 29) which cooperate with drive sections (21, 23) on the belt side and on the drive side.

7. A seat belt apparatus in accordance with claim 6, **characterized in that** the blocking spring (19) is wound and the control sections (27, 29) form the ends of the turn.

8. A seat belt apparatus in accordance with claim 6 or claim 7, **characterized in that** the blocking spring (19) is compressed by pressing together the control sections (27, 29) and expands by pressing apart the control sections (27, 29), or vice versa.

9. A seat belt apparatus in accordance with any one of the claims 6 to 8, **characterized in that** the blocking spring (19) amplifies the blocking effect by pressing together the control sections (27 29) and reverses it into the release state by pressing apart the control sections (27, 29), or vice versa.

10. A seat belt apparatus in accordance with any one of the claims 6 to 9, **characterized in that** an inner drive section (21) of the one side is positioned between the two control sections (27, 29) of the blocking spring (19), with the inner drive section (21) being positioned together with the control sections (27, 29) between two parts (23a, 23b) of an outer drive section (23) of the other side having a fixed spacing from one another.

11. A seat belt apparatus in accordance with any one of the claims 6 to 10, **characterized in that**, with a blocking spring (19) in the normal state, its control sections (27, 29) are positioned with clearance at least with respect to one drive section (21, 23), preferably with respect to both drive sections.

12. A seat belt apparatus in accordance with claim 10 or claim 11, **characterized in that** the inner drive section (21) is associated with the drive side and the outer drive section (23) is associated with the belt side.

13. A seat belt apparatus in accordance with any one of the claims 6 to 12, **characterized in that** the control sections (27, 29) of the blocking spring (19) and the drive sections (21, 23) on the drive side and belt side are arranged at a radial spacing from a rotary axis of the drivetrain to be able to rotate the blocking spring (19) seated on the stationary holding section (25) and the supports (31, 33) for the drive sections (21, 23) on the drive side and on the belt side.

## Revendications

1. Dispositif de ceinture de sécurité pour véhicules automobiles, comprenant
- une ceinture de sécurité (11),
- un enrouleur de ceinture (13), et
- un dispositif d'entraînement (15) pour l'enrouleur (13), qui comprend de préférence un moteur électrique (17),
un organe de blocage (19) à effet unidirectionnel étant intégré dans le train d'entraînement entre le dispositif d'entraînement (15) et l'enrouleur (13), organe qui, à partir d'un état normal de blocage, renforce l'effet de blocage en cas de transmission de forces appliquées depuis la ceinture (13), et qui bascule en un état de libération en cas de transmission de forces appliquées par le dispositif d'entraînement (15).

2. Dispositif de ceinture de sécurité selon la revendication 1,
**caractérisé en ce que**
l'organe de blocage (19) renforce l'effet de blocage ou bascule en état de libération aussi bien en cas de transmission de forces appliquées dans le sens de l'enroulement (W), que de forces appliquées dans le sens du déroulement (U).

3. Dispositif de ceinture de sécurité selon la revendication 1 ou 2,
**caractérisé en ce que**
l'organe de blocage (19) est un organe de blocage mécanique.

4. Dispositif de ceinture de sécurité selon l'une des revendications précédentes,
**caractérisé en ce que** l'organe de blocage (19) comprend un ressort de blocage, qui est notamment réalisé sous forme d'un ressort à enroulement ou d'un ressort en spirale.

5. Dispositif de ceinture de sécurité selon la revendication 4,
**caractérisé en ce que**
le ressort de blocage (19) est logé sur une section de support (25) découplée du train d'entraînement, maintenue stationnaire par rapport à des parties d'entraînement (21, 23) côté entraînement et côté ceinture, partie à laquelle le ressort de blocage (19) est relié, à l'état de blocage, par couplage des forces.

6. Dispositif de ceinture de sécurité selon la revendication 4 ou 5,
**caractérisé en ce que**
le ressort de blocage (19) comporte deux parties de commande (27, 29) espacées l'une de l'autre, qui coopèrent avec des parties d'entraînement (21, 23) côté ceinture et côté entraînement.

7. Dispositif de ceinture de sécurité selon la revendication 6,
**caractérisé en ce que**
le ressort de blocage (19) est enroulé, et que les parties de commande (27, 29) forment les extrémités de l'enroulement.

8. Dispositif de ceinture de sécurité selon la revendication 6 ou 7,
**caractérisé en ce que**
le ressort de blocage (19) se contracte, quand les parties de commande (27, 29) sont serrées l'une vers l'autre, et s'ouvre, quand les parties de commande (27, 29) sont écartées l'une de l'autre, et vice versa.

9. Dispositif de ceinture de sécurité selon l'une des revendications 6 à 8,
**caractérisé en ce que**
le ressort de blocage (19) renforce l'effet de blocage, lorsque les parties de commande (27, 29) sont serrées l'une vers l'autre, et bascule en mode de libération, lorsque les parties de commande (27, 29) sont écartées l'une de l'autre, et vice versa.

10. Dispositif de ceinture de sécurité selon l'une des revendications 6 à 9,
**caractérisé en ce que**
une partie d'entraînement intérieure (21) de l'un des côtés est positionnée entre les deux parties de commande (27, 29) du ressort de blocage (19), la partie d'entraînement intérieure (21) étant positionnée conjointement avec les parties de commande (27, 29) entre deux pièces (23a, 23b) d'une partie d'entraînement extérieure (23) de l'autre côté, qui présentent une distance fixe entre elles.

11. Dispositif de ceinture de sécurité selon l'une des revendications 6 à 10,
**caractérisé en ce que**,
lorsque le ressort de blocage (19) se trouve en position normale, les parties de commande (27, 29) de celui-ci sont positionnées avec un certain jeu par rapport à l'un au moins des parties d'entraînement (21, 23), de préférence par rapport aux deux parties d'entraînement.

12. Dispositif de ceinture de sécurité selon la revendication 10 ou 11,
**caractérisé en ce que**
la partie d'entraînement intérieure (21) est associée au côté d'entraînement, et la partie d'entraînement extérieure (23) est associée au côté ceinture.

13. Dispositif de ceinture de sécurité selon l'une des revendications 6 à 12,
**caractérisé en ce que**
les parties de commande (27, 29) du ressort de blocage (19) et les parties d'entraînement (21, 23) des côtés entraînement et ceinture sont disposées à une distance radiale d'un axe de rotation du train d'entraînement, autour duquel peuvent tourner le ressort de blocage (19) logé sur la section de support stationnaire (25), ainsi que les supports (31, 33) pour les parties d'entraînement (21, 23), côté entraînement et côté ceinture.
